# EUROPÄISCHE PATENTSCHRIFT

(11) **EP 1 348 792 B1**
(45) Veröffentlichungstag und Bekanntmachung des Hinweises auf die Patenterteilung: **16.04.2008**
(21) Anmeldenummer: 03003002.7
(22) Anmeldetag: 12.02.2003
(51) Int. Cl.: D05B 19/12, D05B 69/12

(54) **Mikroprozessor-gestützte Steuervorrichtung für eine Nähmaschine**
Control device with microprocessor for a sewing machine
Dispositif de commande à microprocesseur pour une machine à coudre

(30) Priorität: 02.03.2002 DE 10209317
(43) Veröffentlichungstag der Anmeldung: 01.10.2003
(73) Patentinhaber: DÜRKOPP ADLER AKTIENGESELLSCHAFT, D-33719 Bielefeld (DE)
(72) Erfinder: Meyer, Bernd, 33106 Paderborn (DE); Hosagasi, Sevki, Dr.-Ing., 33699 Bielefeld (DE); Cramer, Andree, 32758 Detmold (DE); Seibert, Horst, 33647 Bielefeld (DE)
(74) Vertreter: Rau, Manfred

(56) Entgegenhaltungen:
- DE-A- 3 213 277
- DE-A- 3 540 273
- DE-A- 4 416 216
- DE-C- 19 807 771

## Beschreibung

Die Erfindung betrifft eine Mikroprozessor-gestützte Steuervorrichtung für eine Nähmaschine mit den im Oberbegriff des Anspruches 1 angegebenen Merkmalen.

Eine derartige Steuervorrichtung ist aus der DE 36 32 046 C2 (= US 4,787,326 C2) bekannt. Die dort verwendete Grundstruktur der Steuerung sieht ein Rechnerteil mit einem Speicher in Form eines Programmträgers vor, in den ein Nähmaschinen-Steuerprogramm abgelegt werden kann. Damit wird ein Nähautomat gesteuert, der einen in zwei Koordinatenrichtungen bewegbaren Nähguthalter und einen um eine Achse drehbaren Nähkopf zur Erzeugung einer Naht nach einem durch das Programm vorgebbaren Verlauf in einem Nähgut aufweist. Für die Erzeugung der Nähguthalterbewegung und Nähkopfdrehung sind jeweils Elektromotoren vorgesehen, die wie der Nähmaschinen-Antriebsmotor über ein Leistungsteil mit entsprechenden Treibern leistungsangesteuert werden.

Steuerungstechnisch wird der Nähmaschinen-Antriebsmotor mittels einer Steuereinrichtung in Abhängigkeit seiner Drehstellung geregelt angesteuert. Die Elektromotoren werden abgestimmt zur Motorstellung des Nähmaschinen-Antriebsmotors angesteuert, wobei die Elektromotoren mit Drehstellungsgebern versehen sind.

Die bekannte Steuervorrichtung ist dahingehend nachteilig, dass sie speziell für den konkreten Anwendungsfall zugeschnitten ist. Für einen drehstellungsunabhängig anzusteuernden Elektromotor ist also ein einfaches Steuerteil ohne Rückführung eines Drehstellungssignals vorgesehen, während für einen drehstellungsabhängig geregelten Elektromotor ein entsprechendes Regelteil mit Einbeziehung eines rückgeführten Drehstellungssignals eingesetzt wird. Soll nun eine andersartige Nähvorrichtung mit abweichend davon konfigurierten Zusatz-Elektromotoren angesteuert werden, so muss dafür wieder eigens eine speziell angepasste Steuervorrichtung geschaffen werden. Dies bedingt einen hohen Entwicklungs- und Fertigungsaufwand mit entsprechend hohen Herstellungskosten, da die jeweilige Steuervorrichtung speziell konstruiert und in aller Regel nur in geringen Stückzahlen gefertigt wird.

Ausgehend von dieser Problematik liegt der Erfindung die Aufgabe zugrunde, die bekannte Nähmaschinen-Steuervorrichtung so weiterzubilden, dass sie universell und unabhängig von der speziellen Konfiguration der angeschlossenen Elektromotoren hinsichtlich deren drehstellungsunabhängigen oder -abhängigen Steuerung einsetzbar ist.

Diese Aufgabe wird durch die im Kennzeichnungsteil des Anspruches 1 angegebenen Merkmale gelöst. Kern der Erfindung ist dabei die jeweils einem Elektromotor zugeordnete Steuereinrichtung, die die notwendige Universalität schafft. Diese Steuereinrichtung weist nämlich sowohl ein Steuerteil zur drehstellungsunabhängigen Ansteuerung des Elektromotors als auch ein Regelteil zur drehstellungsabhängig geregelten Ansteuerung des Elektromotors auf der Basis eines Drehstellungssignals eines am Elektromotor angeordneten Drehstellungssensors auf. Ein dem Steuer- und Regelteil zugeordnetes Selektionsteil sorgt dafür, dass in Abhängigkeit der Konfiguration des angeschlossenen Elektromotors entweder das Regelteil oder das Steuerteil mit diesem Motor steuerungsmäßig gekoppelt wird. Ist der Elektromotor drehstellungsabhängig zu regeln, wird das Regelteil mit dem Elektromotor schalttechnisch verbunden, während bei einer drehstellungsunabhängigen Steuerung das Steuerteil über das Selektionsteil angekoppelt wird.

Durch die vorstehende Grundarchitektur und bei einer bestimmten Anzahl identischer Steuereinrichtungen für eine entsprechende Anzahl von Elektromotoren kann die gesamte erfindungsgemäße Steuervorrichtung jeweils konkret an die steuerungstechnischen Anforderungen der angeschlossenen Elektromotoren angepasst werden. Unabhängig davon wird der eigentliche Nähmaschinen-Antriebsmotor für die Nadelbewegung wie üblich drehstellungsabhängig geregelt.

In den Unteransprüchen sind bevorzugte Ausführungsformen der erfindungsgemäßen Steuervorrichtung angegeben.

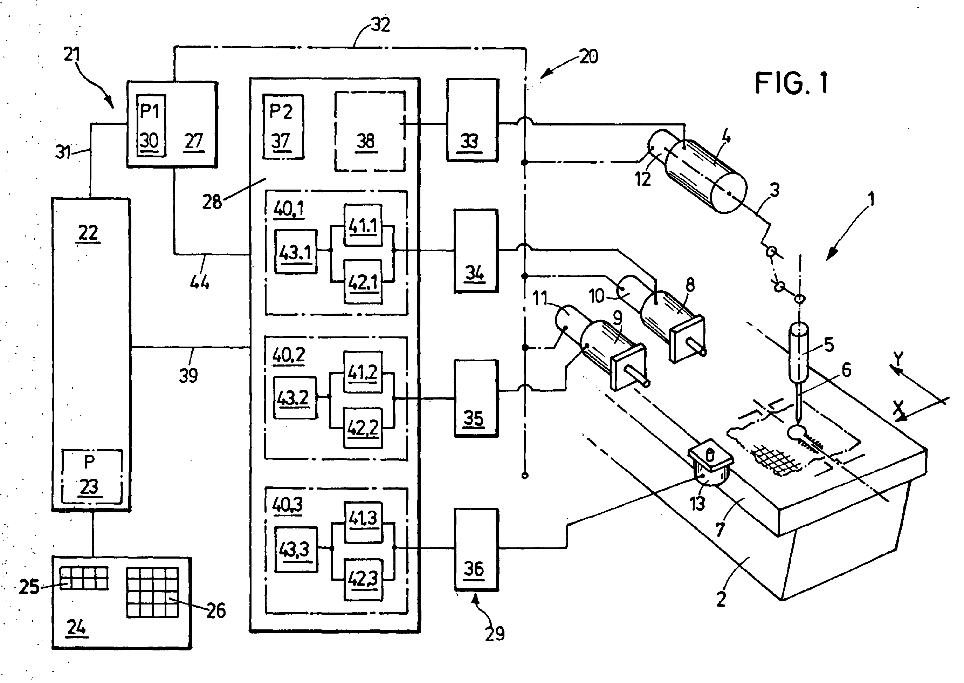

Ein Ausführungsbeispiel wird nachfolgend anhand der Zeichnung näher erläutert. Diese
Fig. 1 zeigt eine schematische Perspektivdarstellung einer Nähmaschine mit zugeordneter Steuervorrichtung in Blockdiagramm-Darstellung.

Von der im rechten Teil der Zeichnung dargestellten Nähmaschine 1 ist lediglich die untere, gehäuseartig ausgebildete Grundplatte 2 gezeichnet, wogegen der sogenannte Ständer und Arm der Maschine weggelassen sind. Im Arm ist in üblicher Weise eine Armwelle 3 gelagert, die von einem Antriebsmotor 4 antreibbar ist. Von der Armwelle 3 wird in üblicher Weise der Antrieb einer vertikal verschiebbaren Nadelstange 5 mit einer Nadel 6 abgeleitet.

Auf der Grundplatte 2 ist ein X-Y-Tisch 7 angeordnet, bei dem es sich um einen in zwei horizontalen Koordinatenrichtungen, nämlich der X-Richtung und der Y-Richtung, verschiebbaren Kreuzschlitten handelt. Der X-Y-Tisch 7 ist in üblicher Weise ausgebildet, wie sie beispielsweise aus der DE 198 07 771 A1 (entsprechend US 6 095 066 A) bekannt ist. Der Antrieb des X-Y-Tisches 7 in den beiden Koordinatenrichtungen erfolgt mithilfe von Elektromotoren 8, 9, von denen der eine 8 als X-Antrieb und der andere 9 als Y-Antrieb fungiert. Bei den Elektromotoren 8, 9 handelt es sich um positionierbare Elektromotoren, in der Regel also bevorzugt um Schrittmotoren, oder aber auch um regelbare Gleichstrommotoren. Bei beiden Motoren 8, 9 ist aufgrund ihrer Funktion eine drehstellungsabhängig geregelte Ansteuerung vorgesehen, sodass sie jeweils mit einem Drehstellungsgeber 10, 11 versehen sind. Ein solcher Drehstellungsgeber 12 ist auch wie üblich am Nähmaschinen-Antriebsmotor 4 angeordnet.

Ein weiterer Elektromotor 13 dient als Verschiebeantrieb für eine in der Zeichnung nicht näher dargestellte Tragplatte auf dem X-Y-Tisch 7. Der Elektromotor 13 ist als Schrittmotor spezifiziert, der drehstellungsunabhängig angesteuert werden kann. Insoweit ist bei diesem Elektromotor 13 kein Drehstellungsgeber vorgesehen.

Für die Betriebssteuerung der Nähmaschine 1 ist die als Ganzes mit 20 bezeichnete Mikroprozessor-gestützte Steuervorrichtung vorgesehen. Diese weist als zentrales Bauteil ein Rechnerteil 21 mit einem Master-Prozessor 22 und einem nicht-flüchtigen, residenten Speicher 23 auf. In diesem sogenannten Flash-Speicher 23 ist das komplette Steuerprogramm P für die Nähmaschine dauerhaft gespeichert, das verschiedene Programmteile, wie das eigentliche Betriebsprogramm, die entsprechenden Treiber für die peripheren Komponenten, Ablaufprogramme für Service-Funktionen und weitere Programmteile P1 und P2 für noch näher zu erörternde Komponenten der Steuervorrichtung 20 enthält.

Die Bedienung der Nähmaschine 1 und ihrer Steuervorrichtung 20 erfolgt über ein dem Master-Prozessor 22 zugeordnetes Bedienfeld 24, das eine Anzeige 25 und eine Tastatur 26 umfasst. Die entsprechenden Schnittstellenkomponenten und Treiber für die Steuerung des Bedienfelds 24 und für die Kommunikation mit diesem sind üblicher Natur und in der Zeichnung der Übersichtlichkeit halber weggelassen.

Die Steuervorrichtung 20 weist als weitere Basiskomponenten einen Logikbaustein 27, einen als Ganzes mit 28 bezeichneten Signalprozessor sowie ein Leistungsteil 29 für die eigentliche Leistungsansteuerung der Motoren 4, 8, 9 und 13 auf.

Der Logikbaustein 27 enthält einen flüchtigen Speicher 30, der mit dem Programmteil P1 des kompletten Steuerprogramms P vom Master-Prozessor 22 aus über eine Leitung 31 geladen wird. Dieses Programmteil P1 umfasst beispielsweise logische Verknüpfungen für die entsprechenden Schaltvorgänge zum Ansteuern der Motoren 4, 8, 9 und 13.

Um die aktuelle Lage und die aktuelle Drehzahl der drehstellungsabhängig geregelten Motoren 4, 8 und 9 zu erfassen, sind über das Leitungsbündel 32 die Signale der Drehstellungsgeber 10, 11 und 12 auf den Logikbaustein 27 rückgekoppelt.

Der Signalprozessor 28 dient zur Erzeugung der eigentlichen Steuersignale zum Betrieb der Motoren 4, 8, 9 und 13, die über die Treiber 33, 34, 35 , 36 des Leistungsteils 29 leistungsangesteuert werden.

Der Signalprozessor 28 selbst weist wiederum einen flüchtigen Speicher 37 auf, in den der Programmteil P2 des kompletten Steuerprogramms P über eine Leitung 39 vom Master-Prozessor 22 bei Inbetriebnahme der Nähmaschinensteuerung eingespeichert wird. Das Programmteil P2 steuert die Komponenten des Signalprozessors in der im Folgenden noch näher erörterten Weise.

So wird darüber die Steuereinrichtung 38 für den eigentlichen Antriebsmotor 4 gesteuert, der drehstellungsabhängig geregelt wird. Die Rückrührung des Drehstellungssignals erfolgt in der erörterten Weise über das Leitungsbündel 32 und den Logikbaustein 27.

Ferner ist der Signalprozessor 28 mit jeweils einer Steuereinrichtung 40.1, 40.2, 40.3 für die drei Motoren 8, 9 und 13 versehen. Diese Steuereinrichtungen 40 sind identisch aufgebaut, daher soll im Folgenden lediglich die eine Steuereinrichtung 40.1 näher erörtert werden. So weist diese zum einen ein Steuerteil 41.1 auf, das entsprechende Signale zur drehstellungsunabhängigen Ansteuerung des Elektromotors 8 erzeugt. Gleichermaßen ist ein Regelteil 42.1 integriert, das parallel zum Steuerteil 41.1 angeordnet und zur drehstellungsabhängig geregelten Ansteuerung des daran angeschlossenen Elektromotors - in diesem Fall Elektromotor 8 - ausgerichtet ist. Insoweit wird wiederum auf die Information des Drehstellungsgebers 10 über die Rückführung über das Leitungsbündel 32 und den Logikbaustein 27 zugegriffen, der über die Befehlsleitung 44 mit dem Signalprozessor 28 verbunden ist.

Schließlich ist ein Selektionsteil 43.1 in Form eines soft- oder hardwaremäßig realisierbaren ODER-Bausteins dem Steuer- 41.1 und Regelteil 42.1 zugeordnet, mit dem entweder das Steuerteil 41.1 oder das Regelteil 42.1 mit dem Elektromotor 8 steuerungsmäßig koppelbar ist. So sieht das Selektionsteil 43.1, 43.2 der beiden den drehstellungsabhängig geregelten Elektromotoren 8, 9 zugeordneten Steuereinrichtungen 40.1, 40.2 vor, dass die Regelteile 42.1, 42.2 aktiviert und für eine drehstellungsabhängige Ansteuerung der Elektromotoren verantwortlich sind. In der Steuereinrichtung 40.3 hat das Selektionsteil 43.3 das Steuerteil 41.3 aktiviert, um über den entsprechenden Treiber 36 den Elektromotor 13 drehstellungsunabhängig zu steuern.

Die Selektionsteile 43.1, 43.2, 43.3 selbst werden per Software über den Programmteil P2 im Speicherbaustein 37 gesteuert und entsprechend den Vorgaben selektiv eingestellt.

Im Folgenden soll der Vollständigkeit halber eine Inbetriebnahme der Steuervorrichtung 20 und Nähmaschine 1 kurz umrissen werden. So wird mit dem Einschalten der Steuervorrichtung 20 und der Stromversorgung durch ein nicht näher dargestelltes Netzteil der Master-Prozessor 22 veranlasst, das im residenten Speicher 23 abgelegte Programmteil P1 in den Speicher 30 des Logikbausteins 27 und das Programmteil P2 in den Speicher 37 im Signalprozessor 28 zu laden. Diese Speicherarchitektur bringt den Vorteil, dass eine Programmaktualisierung, beispielsweise bei Änderungen in logischen Verknüpfungen innerhalb des Logikbausteins 27 oder bei Anpassungen der Regelalgorithmen für den Signalprozessor 28, zentral über eine Änderung des Steuerprogramms P im residenten Speicher 23 erfolgen kann.

Über den im Speicher 37 befindlichen Programmteil P2 werden dann die Selektionsteile 43.1, 43.2, 43.3 angesteuert, sodass gemäß dem geschilderten Ausführungsbeispiel die Elektromotoren 8 und 9 jeweils mit einem geschlossenen Regelkreis über die Regelteile 42.1, 42.2 geführt werden. Der Elektromotor 13 wird ohne geschlossenen Regelkreis, also ohne eine Drehstellungsrückmeldung über das Steuerteil 41.3 angesteuert.

Die für die Regelung beziehungsweise Steuerung aller Motoren 4, 8, 9 und 13 relevanten Anweisungen hinsichtlich deren Regelcharakteristik sind ebenfalls in dem Programmteil P2 enthalten.

Nach der Inbetriebnahme des Signalprozessors 28 kommuniziert der Master-Prozessor 22 über die Leitung 39 mit dem Signalprozessor 28, um Befehls- oder/und Sollwert-Daten auszutauschen.

Wird bei einer abweichenden Nähmaschine beispielsweise der Elektromotor 9 drehstellungsunabhängig ohne Rückmeldung der Motordrehstellung betrieben, so braucht im Steuerprogramm P lediglich die Befehlsgabe an die Steuereinrichtung 40.2 dahingehend geändert zu werden, dass das Selektionsteil 43.2 das Steuerteil 41.2 aktiviert. Im Übrigen kann die gesamte Steuervorrichtung 20 hard- und softwaremäßig unverändert benutzt werden.

Der gesamte Steuerungsaufbau der Steuervorrichtung 20 ist vorzugsweise auf einer einzigen (nicht explizit dargestellten) Platine implementiert.

Zusammenfassend stellt die Erfindung eine flexible, anpassungsfähige und damit universell einsetzbare Steuerung für Nähmaschinen unterschiedlicher Typen bereit, die je nach Anwendungsfall den Antrieb der Nähmaschine und - in Abhängigkeit deren Drehbewegung entsprechend einer Master-Slave-Achsenführung - die Ansteuerungen von weiteren Achsen in Form von Elektromotoren gestattet. Deren Betriebsweise mit oder ohne Drehstellungsrückmeldung ist unabhängig voneinander per Programm festlegbar.

## Patentansprüche

1. Mikroprozessor-gestützte Steuervorrichtung für eine Nähmaschine
- mit einem Rechnerteil (21) mit Speicher (23, 30, 37) für ein Nähmaschinen-Steuerprogramm, und
- mit einem Leistungsteil (29) mit Treibern (33 - 36) für die Leistungsansteuerung eines geregelten Nähmaschinen-Antriebsmotors (4) und mindestens eines weiteren Elektromotors (8, 9, 13),
- wobei der Nähmaschinen-Antriebsmotor (4) mittels einer Steuereinrichtung (38) in Abhängigkeit seiner Drehstellung geregelt ansteuerbar ist, und
- wobei der mindestens eine Elektromotor (8, 9, 13) abgestimmt zur Motorstellung des Nähmaschinen-Antriebsmotors (4) ansteuerbar ist,
**gekennzeichnet durch**
- eine dem Elektromotor (8, 9, 13) zugeordnete Steuereinrichtung (40), die aufweist
= ein Steuerteil (41.1, 41.2, 41.3) zur drehstellungsunabhängigen Ansteuerung des Elektromotors (13),
= ein Regelteil (42.1, 42.2, 42.3) zur drehstellungsabhängig geregelten Ansteuerung des Elektromotors (8, 9) auf der Basis eines Drehstellungssignals eines am Elektromotor (8, 9) angeordneten Drehstellungssensors (10, 11), und
= ein dem Steuer- und dem Regelteil (41.1, 41.2, 41.3; 42.1, 42.2, 42.3) zugeordnetes Selektionsteil (43.1, 43.2, 43.3), mittels dem entweder das Regelteil (42.1, 42.2, 42.3) oder das Steuerteil (41.1, 41.2, 41.3) mit dem Elektromotor (8, 9, 13) in Abhängigkeit davon steuerungsmäßig koppelbar ist, ob der Elektromotor (8, 9, 13) drehstellungsabhängig geregelt oder drehstellungsunabhängig anzusteuern ist.

2. Nähmaschinen-Steuervorrichtung nach Anspruch 1, **dadurch gekennzeichnet, dass** das Selektionsteil (43.1, 43.2, 43.3) als Schalteinrichtung insbesondere in Form eines logischen ODER-Bausteins ausgebildet ist, die eine Schaltverbindung zwischen dem Rechnerteil (21) und entweder dem Steuerteil (41) oder dem Regelteil (42) herstellt.

3. Nähmaschinen-Steuervorrichtung nach Anspruch 1 oder 2, **dadurch gekennzeichnet, dass** mehrere identisch aufgebaute Steuereinrichtungen (40.1, 40.2, 40.3) für eine entsprechende Anzahl von Elektromotoren (8, 9, 13) vorgesehen sind.

4. Nähmaschinen-Steuervorrichtung nach einem der vorgenannten Ansprüche, **dadurch gekennzeichnet, dass** die Steuereinrichtungen (38, 40) für den Nähmaschinen-Antriebsmotor (4) und für den/die Elektromotor/-en (8, 9, 13) auf einem Signalprozessor (28) zusammengefasst sind.

5. Nähmaschinen-Steuervorrichtung nach Anspruch 4, **dadurch gekennzeichnet, dass** dem Signalprozessor (28) ein eigener flüchtiger Speicher (37) für ein Steuerprogramm (P2) für den Nähmaschinen-Antriebsmotor (4) und für den/die Elektromotor/-en (8, 9, 13) zugeordnet ist.

6. Nähmaschinen-Steuervorrichtung nach einem der vorgenannten Ansprüche, **dadurch gekennzeichnet, dass** der Speicher der Steuervorrichtung (20) einen residenten Speicher (23) und mindestens einen flüchtigen Speicher (30, 37) aufweist.

7. Nähmaschinen-Steuervorrichtung nach Anspruch 6, **dadurch gekennzeichnet, dass** das Rechnerteil (21) einen Master-Prozessor (22) mit dem residenten Speicher (23) und einen Logikbaustein (27) aufweist.

8. Nähmaschinen-Steuervorrichtung nach Anspruch 5 und 7, **dadurch gekennzeichnet, dass** der Logikbaustein (27) einen flüchtigen Speicher (30) aufweist, der mit dem flüchtigen Speicher (37) des Signalprozessors (28) den flüchtigen Speicher der Steuervorrichtung bildet.

9. Nähmaschinen-Steuervorrichtung nach Anspruch 7 oder 8, **dadurch gekennzeichnet, dass** vom Masterprozessor (22) und dessen residenten Speicher (23) der Logikbaustein (27) und der Signalprozessor (28) mit den Selektionsteilen (43) nach Art einer Master-Slave-Steuerung geführt werden.

10. Nähmaschinen-Steuervorrichtung nach einem der vorgenannten Ansprüche, **dadurch gekennzeichnet, dass** der gesamte Steuerungsaufbau auf einer Platine integriert ist.

## Claims

1. A microprocessor-assisted sewing machine control equipment, comprising
- a computer unit (21) with a memory (23, 30, 37) for a sewing machine control program; and
- a power output unit (29) with drivers (33-36) for power controlling a controlled sewing machine driving motor (4) and at least another electric motor (8, 9, 13);
- the sewing machine driving motor (4) being controlled by closed-loop control through a control system (38) in dependence on its rotary position; and
- the at least one electric motor (8, 9, 13) being controlled in a manner tuned to the position of the sewing machine driving motor (4);
**characterized by**
- a control system (40) which is allocated to the electric motor (8, 9, 13), comprising
-- an open-loop control unit (41.1, 41.2, 41.3) for controlling the electric motor (13) independently of the rotary position;
-- a closed-loop control unit (42.1, 42.2, 42.3) for controlling the electric motor (8, 9) in dependence on the rotary position, based on a rotary-position signal of a rotary-position detector (10, 11) that is disposed on the electric motor (8, 9); and
-- a selection unit (43.1, 43.2, 43.3) which is allocated to the open-loop and closed-loop control units (41.1, 41.2, 41.3; 42.1, 42.2, 42.3) and by which either the closed-loop control unit (42.1, 42.2, 42.3) or the open-loop control unit (41.1, 41.2, 41.3) is coupled for control with the electric motor (8, 9, 13), depending on whether the electric motor (8, 9, 13) is controlled by closed-loop control in dependence on the rotary position or by open-loop control independently of the rotary position.

2. A sewing machine control equipment according to claim 1, **characterized in that** the selection unit (43.1, 43.2, 43.3) is a circuit arrangement in particular in the form of a logical OR component, producing a connection between the computer unit (21) and either the open-loop control unit (41) or the closed-loop control unit (42).

3. A sewing machine control equipment according to claim 1 or 2, **characterized in that** several control systems (40.1, 40.2, 40.3) of identical design are provided for a corresponding number of electric motors (8, 9, 13).

4. A sewing machine control equipment according to one of the preceding claims, **characterized in that** the control systems (38, 40) for the sewing machine driving motor (4) and for the electric motor/s (8, 9, 13) are combined on a signal processor (28).

5. A sewing machine control equipment according to claim 4, **characterized in that** allocated to the signal processor (28) is a volatile memory (37) of its own for a control program (P2) for the sewing machine driving motor (4) and for the electric motor/s (8, 9, 13).

6. A sewing machine control equipment according to one of the preceding claims, **characterized in that** the memory of the control equipment (20) includes a resident memory (23) and at least a volatile memory (30, 37).

7. A sewing machine control equipment according to claim 6, **characterized in that** the computer unit (21) comprises a master processor (22) with the resident memory (23) and a logical unit (27).

8. A sewing machine control equipment according to claim 5 and 7, **characterized in that** the logical unit (27) comprises a volatile memory (30), which combines with the volatile memory (37) of the signal processor (28), forming the volatile memory of the control equipment.

9. A sewing machine control equipment according to claim 7 or 8, **characterized in that** the logical unit (27) and the signal processor (28) with the selection units (43) are looped in the way of a master-slave control by the master processor (22) and the resident memory (23) thereof.

10. A sewing machine control equipment according to one of the preceding claims, **characterized in that** the entire control structure is integrated into a board.

## Revendications

1. Dispositif de commande à microprocesseur pour une machine à coudre
- avec une unité (21) dotée d'une mémoire (23, 30, 37) pour un programme de commande de machine à coudre, et
- avec un bloc de puissance (29) doté d'un pilote (33-36) servant à activer la puissance d'un moteur d'actionnement de machine à coudre (4) réglé et au moins un moteur électrique supplémentaire (8, 9, 13),
- où le moteur d'actionnement de machine à coudre (4) peut être activé de façon réglée, à l'aide d'un dispositif de commande (38) dépendant de sa position de tour, et
- où le moteur électrique (8, 9, 13), au moins au nombre de un, peut être activé en adéquation avec la position de moteur du moteur d'actionnement de machine à coudre (4),
**caractérisé par**
- un dispositif de commande (40) affecté au moteur électrique (8, 9, 13), présentant
= une pièce de commande (41.1, 41.2, 41.3) pour l'activation, indépendante de la position de tour, du moteur électrique (13),
= une pièce de réglage (42.1, 42.2, 42.3) pour l'activation réglée, dépendante de la position de tour, du moteur électrique (8, 9) sur la base d'un signal de position de tour d'un détecteur de position de tour (10, 11) disposé sur le moteur électrique (8, 9), et
= une pièce de sélection (43.1, 43.2, 43.3) affectée à la pièce de commande et à la pièce de réglage (41.1, 41.2, 41.3 ; 42.1, 42.2, 42.3), à l'aide de laquelle soit la pièce de réglage (42.1, 42.2, 42.3), soit la pièce de commande (41.1, 41.2, 41.3) peut être couplée avec le moteur électrique (8, 9, 13) de façon commandée dépendant du fait que le moteur électrique (8, 9, 13) est, soit réglé en dépendance de la position de tour, soit à activer indépendamment de la position de tour.

2. Dispositif de commande pour machine à coudre selon la revendication 1, **caractérisé en ce que** la pièce de sélection (43.1, 43.2, 43.3) est conçue comme un dispositif d'allumage, en particulier sous forme de composant Ou logique, lequel établit une connexion entre l'unité (21) et, soit la pièce de commande (41), soit la pièce de réglage (42).

3. Dispositif de commande pour machine à coudre selon la revendication 1 ou 2, **caractérisé en ce que** plusieurs dispositifs de commande (40.1, 40.2, 40.3) montés de façon identique, sont prévus pour un nombre correspondant de moteurs électriques (8, 9, 13).

4. Dispositif de commande pour machine à coudre selon l'une des revendications précédentes, **caractérisé en ce que** les dispositifs de commande (38, 40) pour le moteur d'actionnement de machine à coudre (4) et pour le/les moteur(s) électrique(s) (8, 9, 13), sont condensés sur un processeur de signaux (28).

5. Dispositif de commande pour machine à coudre selon la revendication 4, **caractérisé en ce que** le processeur de signaux (28) dispose de sa propre mémoire transitoire (37) pour un programme de commande (P2) pour le moteur d'actionnement de machine à coudre (4) et pour le/les moteur(s) électrique (s) (8, 9, 13).

6. Dispositif de commande pour machine à coudre selon l'une des revendications précédentes, **caractérisé en ce que** la mémoire du dispositif de commande (20) présente une mémoire résidente (23) et au moins une mémoire transitoire (30, 37).

7. Dispositif de commande pour machine à coudre selon la revendication 6, **caractérisé en ce que** l'unité (21) présente un processeur Master (22) avec la mémoire résidente (23) et un composant logique (27).

8. Dispositif de commande pour machine à coudre selon les revendications 5 et 7, **caractérisé en ce que** le composant logique (27) présente une mémoire transitoire (30) qui, avec la mémoire transitoire (37) du processeur de signaux (28), constitue la mémoire transitoire du dispositif de commande.

9. Dispositif de commande pour machine à coudre selon la revendication 7 ou 8, **caractérisé en ce que** le composant logique (27) et le processeur de signaux (28) sont dirigés avec les pièces de sélection (43) à la manière d'une commande Master-Slave, depuis le processeur Master (22) et sa mémoire résidente (23).

10. Dispositif de commande pour machine à coudre selon l'une des revendications précédentes, **caractérisé en ce que** tout le montage de commande est intégré dans une platine.
